Europäisches Patentamt

European Patent Office

Office européen des brevets

(19)

(11) Veröffentlichungsnummer: **0 125 407**
**B1**

(12) **EUROPÄISCHE PATENTSCHRIFT**

(45) Veröffentlichungstag der Patentschrift:
**27.01.88**

(51) Int. Cl.⁴: **F 02 B 37/02**

(21) Anmeldenummer: **84102320.3**

(22) Anmeldetag: **05.03.84**

(54) **Mittels Abgasturbolader nach dem Stauprinzip aufgeladene Viertakt-Brennkraftmaschine.**

(30) Priorität: **15.03.83 DE 3309183**

(43) Veröffentlichungstag der Anmeldung:
**21.11.84 Patentblatt 84/47**

(45) Bekanntmachung des Hinweises auf die Patenterteilung:
**27.01.88 Patentblatt 88/4**

(84) Benannte Vertragsstaaten:
**CH FR LI NL**

(56) Entgegenhaltungen:
**DE - A - 2 914 691**
**DE - C - 1 167 112**
**GB - A - 2 084 647**

**K. ZINNER "Aufladung von Verbrennungsmotoren", 2.
Auflage, 1980, SPRINGER-VERLAG, Berlin, Seiten
327-329**

(73) Patentinhaber: **M.A.N. - B&W Diesel GmbH,
Stadtbachstrasse 1, D-8900 Augsburg 1 (DE)**

(72) Erfinder: **Mikota, Thomas, Nordstr. 30, D-8904 Friedberg
(DE)**

## Beschreibung

Die Erfindung betrifft eine mittels Abgasturbolader nach dem Stauprinzip aufgeladene Viertakt-Brennkraftmaschine gemäss dem Oberbegriff des Patentanspruches.

Aus der DE-PS 1 167 112 ist ein Abgasleitungssystem für eine mehrzylindrige Grossdieselmaschine bekannt, bei der der gradlinige Teil einer Verbindungsleitung zwischen Auslasskanal und Abgas-Sammelrohr aus einer düsenartigen Einschnürung mit daran anschliessendem, sich konisch erweiterndem Diffusorrohr besteht, dessen Kegelwinkel etwa 6° bis 10° und dessen Einmündungsquerschnitt in das Sammelrohr etwa doppelt so gross ist wie der Querschnitt unmittelbar vor Beginn der Einschnürung. Dieses gemäss der Beschreibung für Zweitakt- und Viertaktverfahren anwendbare System berücksichtigt die Gasdynamik des verbundenen Systems Zylinder/Abgaskanal offensichtlich nicht, denn über eine Abhängigkeit der Diffusorquerschnitte von der Kolbenfläche oder der Kolbengeschwindigkeit ist dort nichts offenbart, so dass eine günstige Auslegung der Verbindungsleitung dem Zufall überlassen bleibt. Ferner endet die diffusorartige Verbindungsleitung an der Wandung der Abgas-Sammelleitung und ist nicht in diese hinein verlängert, wodurch der Wirkungsgrad bei der Umwandlung von kinetischer Energie in vom Turbolader nutzbaren Druck verschlechtert wird. Eine solche Verlängerung des Diffusors in die Abgas-Sammelleitung zeigt K. Zinner in seinem Lehrbuch «Aufladung von Verbrennungsmotoren», 2. Auflage Berlin 1980, in den Bildern 12.30 und 12.31 auf den Seiten 327/328 für eine nach dem Stauprinzip aufgeladene Zweitakt-Brennkraftmaschine, ohne jedoch auf eine Auslegung der Leitungsquerschnitte einzugehen.

Der Erfindung liegt die Aufgabe zugrunde, Auslasskanäle für eine nach dem Stauprinzip aufgeladene Viertaktbrennkraftmaschine zu schaffen, die in Abhängigkeit von deren jeweiligen Konstruktions- und Auslegungsdaten eine bestmögliche Ausnutzung der Abgasenergie in der Abgasturbine ermöglichen.

Diese Aufgabe ist bei einer aufgeladenen 4-Takt-Brennkraftmaschine durch Auslasskanäle gelöst, die den im Kennzeichen des Anspruches 1 angegebenen Merkmalen gehorchen.

Durch die erfindungsgemässe Ausbildung der Auslasskanäle wird eine gleichmässige Abgasströmung in denselben erreicht. Ausserdem werden durch die erfindungsgemässe stetige Erweiterung der Auslasskanäle die bei bekannten Lösungen vorhandenen Drosselverluste vernachlässigbar klein. Die in den Abgasen enthaltene kinetische Energie wird durch die diffusorische Wirkung der Auslasskanäle nahezu vollständig in statischen Druck umgewandelt.

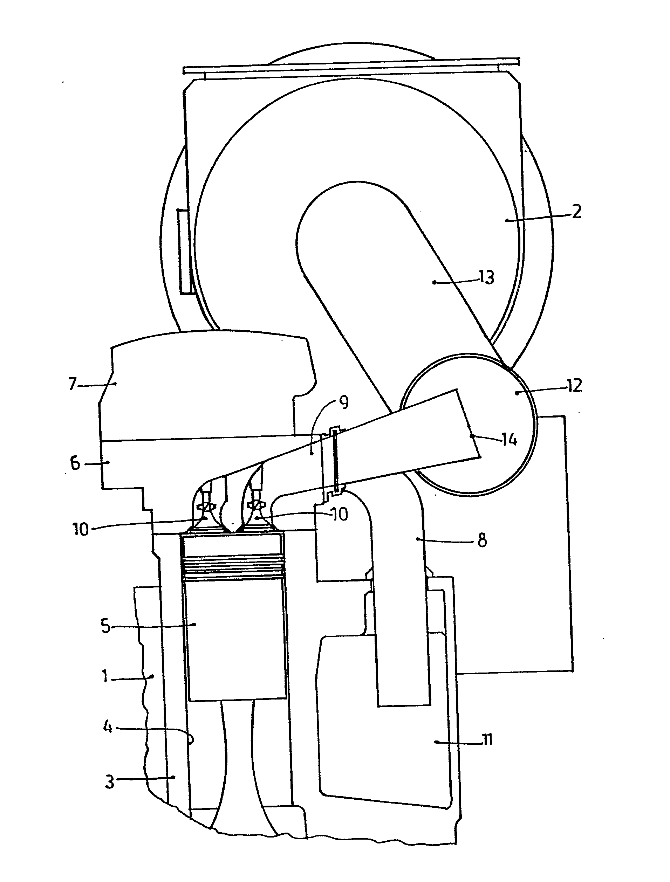

Nachstehend ist die Erfindung anhand eines in der Zeichnung dargestellten Ausführungsbeispieles näher erläutert. In der Zeichnung ist in relativ stark schematisierter Form und auch nur in jenem Teil, der für das Verständnis der Erfindung erforderlich ist, eine mittels Abgasturbolader nach dem Stauprinzip aufgeladene 4-Takt-Brennkraftmaschine dargestellt.

Die 4-Takt-Brennkraftmaschine ist insgesamt mit 1, der Abgasturbolader insgesamt mit 2 bezeichnet. Mit 3 ist ein Zylinder der Maschine, mit 4 dessen Zylinderbohrung und mit 5 ein in letzterer hin- und hergehender Hubkolben bezeichnet. Mit 6 ist ein den Zylinder 3 oben abschliessender Zylinderkopf und mit 7 ein auf letzterem sitzender Zylinderdeckel angezogen. Der Zylinderkopf 6 umfasst einen in der Zeichnung nur teilweise sichtbaren Einlasskanal 8 sowie hier zwei nicht dargestellte Einlassventile, ferner einen Auslasskanal 9, der hier durch zwei Auslassventile 10 beherrscht wird. Der Einlasskanal 8 ragt in eine in das Maschinengehäuse integrierte Ladeluftsammelleitung 11 hinein, die über einen nicht dargestellten Ladeluftkühler mit dem Verdichteraustritt des Abgasturboladers 2 verbunden ist. Der Auslasskanal 9 jedes Zylinders mündet in eine Abgassammelleitung 12, die sich längs und parallel der Zylinderreihe erstreckt sowie über einen Anschlusskanal 13 mit dem Turbineneinlass des Abgasturboladers 2 verbunden ist.

Der Erfindung entsprechend ist zumindest der sich aussen am Zylinderkopf 6 anschliessende Teil jedes Auslasskanales 9 nach Art eines Diffusors sich querschnittsmässig erweiternd ausgebildet; ausserdem ragt jeder Auslasskanal 9 so weit in die Abgassammelleitung 12 hinein, dass Abgas energieverlustarm in letztere eintreten kann. Darüber hinaus ist jeder Auslasskanal 9 hinsichtlich der Grösse seiner an der abgassammelleitungsinternen Mündungsebene 14 gegebenen Austrittsquerschnittsfläche durch folgende Formel bestimmt:

$$A_{AK2} = c_m \cdot \frac{A_K}{22{,}5 \div 30}$$

In dieser Formel bedeuten:

$A_{AK2}$ = an der abgassammelleitungsinternen Mündungsebene 14 des Auslasskanales 9 gegebene Austrittsquerschnittsfläche,

$c_m$ = mittlere Kolbengeschwindigkeit bei Auslegungsdrehzahl, einzusetzen in

$$\left[\frac{m}{s}\right]$$

$A_K$ = Kolbenfläche entsprechend der Querschnittsfläche einer Zylinderbohrung 4 einzusetzen in $[m^2]$.

Dem erfindungsgemässen Ergebnis dieser Formel liegen folgende mathematischen Bedingungen zugrunde. Bei einer Brennkraftmaschine ergibt sich der sogenannte, auf das Hubvolumen eines Zylinders bezogene Zeitquerschnitt $JV_{Ak2}$ während einer Ausschubphase zwischen UT und OT des Kolbens 5 für die Berechnung der an der abgassammelleitungsinternen Mündungsebene

14 des Auslasskanales 9 gegebenen Austritts-Querschnittsebene wie folgt:

Gleichung 1)

$$JV_{AK2} = \frac{UT\int^{OT} A_{AK2} \cdot d\varphi}{6 \cdot n \cdot V_H}$$

Hieraus ergibt sich:
Gleichung 2)

$$JV_{AK2} = \frac{A_{AK2} \cdot 180°}{6 \cdot n \cdot V_H}$$

Das Hubvolumen $V_H$ für eine Ausschubperiode ergibt sich aus dem Produkt von Kolbenfläche $A_K$ (entsprechend der Querschnittsfläche einer Zylinderbohrung 4) und dem Hub, also $V_H = A_K \cdot H$. Dies eingesetzt in die Gleichung 2 ergibt dann folgende Gleichung 3:

Gleichung 3)

$$JV_{AK2} = \frac{A_{AK2} \cdot 180°}{6 \cdot n \cdot A_K \cdot H}$$

Die mittlere Kolbengeschwindigkeit $c_m$ ergibt sich aus dem Produkt der Auslegungsdrehzahl n und dem Kolbenhub geteilt durch 30, also wie folgt:

Gleichung 4)

$$c_m = \frac{n \cdot H}{30}$$

Setzt man dann Gleichung 4) in Gleichung 3) ein, so ergibt sich folgende Gleichung 5:

Gleichung 5)

$$JV_{AK2} = \frac{A_{AK2}}{A_K \cdot c_m}$$

Rechnet man diesen bezogenen Zeitquerschnitt um auf die Geschwindigkeit des während einer Ausschubphase einen Auslasskanal 9 durchströmenden Abgases, dann ergibt sich folgende Gleichung 6:

Gleichung 6)

$$\frac{1}{JV_{AK2}} = c_m \cdot \frac{A_K}{A_{AK2}} \quad \left[\frac{m}{s}\right]$$

Es wurde nun nach der Erfindung gefunden, dass ein Auslasskanal 9 mit den weiter vorn bereits angegebenen konstruktiven Merkmalen die aufgabengemäss gestellten Anforderungen dann erfüllt, wenn das Abgas diesen während einer Ausschubphase mit einer Geschwindigkeit von 22,5 bis 30 m/sec durchströmen kann. Diese erfindungsgemässe Bedingung, eingesetzt in Gleichung 6), ergibt dann folgende Gleichung 7:

Gleichung 7)

$$c_m \cdot \frac{A_K}{A_{AK2}} = 22,5 \div 30 \quad \left[\frac{m}{s}\right]$$

Aufgrund dieser erfindungsgemässen Bedingung lässt sich durch entsprechende Umstellung der Gleichung 7) jeweils die optimale Austritts-Querschnittsfläche an der abgassammelleitungs-internen Mündungsebene 14 eines Auslasskanales 9 berechnen. Die Berechnung erfolgt somit anhand der auch im Patentanspruch so angegebenen Gleichung 8.

Gleichung 8)

$$A_{AK2} = c_m \cdot \frac{A_K}{22,5 \div 30}$$

Es bleibt abschliessend noch anzumerkem, dass der sich aussen am Zylinderkopf 6 anschliessende Teil jedes Auslasskanales 9 jede zweckmässige Querschnittsform aufweisen kann, d.h., die Querschnittsform kann rund, oval, quadratisch oder rechteckig oder ähnlich sein. Zweckmässigerweise mündet der sich aussen am Zylinderkopf 6 anschliessende Teil jedes Auslasskanales 9 senkrecht stehend zur Längsachse der Abgassammelleitung 12 in diese ein. Sofern es sich als vorteilhaft erweist, können die Auslasskanäle 9 jedoch auch schräg mit zur Abgasturbine hin gerichteter Neigung in die Abgassammelleitung 12 einmünden.

Bezugszeichenliste
1 4-Takt-Brennkraftmaschine
2 Abgasturbolader
3 Zylinder
4 Zylinderbohrung
5 Hubkolben
6 Zylinderkopf
7 Zylinderdeckel
8 Einlasskanal
9 Auslasskanal
10 Auslassventil
11 Ladeluftsammelleitung
12 Abgassammelleitung
13 Anschlusskanal
14 Mündungsebene

**Patentanspruch**

Mittels Abgasturbolader nach dem Stauprinzip aufgeladene Viertakt-Brennkraftmaschine, deren durch Auslassventile beherrschte Auslasskanäle in eine Abgassammelleitung senkrecht stehend zu deren Längsachse oder schräg mit zur Abgasturbine hin gerichteter Neigung einmünden, wobei zumindest der sich aussen am Zylinderkopf anschliessende Teil jedes Auslasskanales nach Art eines Diffusors sich querschnittsmässig erweiternd ausgebildet ist, dadurch gekennzeichnet, dass jeder Auslasskanal (9) in die Abgassammelleitung (12) hinein verlängert ist, so weit, dass Abgas energieverlustarm in letztere eintreten kann und dass jeder Auslasskanal (9) hinsichtlich der Grösse seiner an der abgassammelleitungsinternen Mündungsebene (14) gegebenen Austrittsquerschnittsfläche durch folgende Formel bestimmt ist:

$$A_{AK2} = c_m \cdot \frac{A_K}{22,5 \div 30}$$

wobei

$A_{AK2}$ = an der abgassammelleitungsinternen Mündungsebene (14) des Auslasskanales (9) gegebene Austrittsquerschnittsfläche,

$c_m$ = mittlere Kolbengeschwindigkeit bei Auslegungsdrehzahl, einzusetzen in $\left[\dfrac{m}{s}\right]$,

$A_K$ = Kolbenfläche, entsprechend der Querschnittsfläche einer Zylinderbohrung (4) einzusetzen in $\left[m^2\right]$.

**Claim**

Four-stroke internal combustion engine supercharged by an exhaust gas tubocharger according to the ram principle, the outlet passages of which, controlled by outlet valves, open into an exhaust manifold perpendicularly to their longitudinal axis or inclined with an inclination directed to the exhaust gas turbine, whereby at least the part of each outlet passage connected on the outside to the cylinder head is constructed to be enlarged as regards its cross section like a kind of diffusor, characterised in that each outlet passage (9) is extended into the exhaust manifold (12) so far that exhaust gas can enter the latter with low energy losses, and in that with regard to the size of its discharge cross-sectional surface presented at the outlet plane (14) on the inside of the exhaust manifold, each outlet passage (9) is determined by the following formula:

$$A_{AK2} = c_m \cdot \frac{A_K}{22.5 \div 30}$$

wherein

$A_{AK2}$ = the discharge cross sectional surface presented at the outlet plane (14) of the outlet passage (9) on the inside of the exhaust manifold,

$c_m$ = mean piston speed during design speed, to be put in $\left[\dfrac{m}{s}\right]$,

$A_K$ = piston surface, corresponding to the cross-sectional surface of a cylinder bore (4) to be put in $\left[m^2\right]$.

**Revendication**

Moteur à combustion interne à quatre temps, suralimenté au moyen d'un turbocompresseur à gaz d'échappement opérant selon le principe de retenue, dont des canaux d'échappement commandés par des soupapes d'admission débouchent dans un conduit collecteur de gaz d'échappement perpendiculairement à son axe longitudinal ou bien en oblique avec une inclinaison dirigée vers la turbine à gaz d'échappement, au moins la partie de chaque canal d'échappement qui est placée à l'extérieur de la culasse étant agencée à la façon d'un diffuseur dont la section droite s'élargit, caractérisé en ce que chaque canal d'échappement 9 est prolongé à l'intérieur du conduit collecteur de gaz d'échappement 12 suffisamment loin pour que les gaz d'échappement puissent pénétrer dans ce dernier avec une faible perte d'énergie et en ce que chaque canal d'échappement 9 est défini, en ce qui concerne la grandeur de sa surface de section de sortie située dans le plan d'embouchure 14 placé à l'intérieur du conduit collecteur de gaz d'échappement, par la formule suivante:

$$A_{AK2} = c_m \cdot \frac{A_K}{22,5 \div 30}$$

où

$A_{AK2}$ = surface de la section de passage de sortie dans le plan d'embouchure 14, situé à l'intérieur du conduit collecteur de gaz d'échappement, du canal d'échappement 9,

$C_m$ = vitesse moyenne de piston à la vitesse de rotation nominale, exprimée en

$$\left[\frac{m}{s}\right]$$

$A_K$ = surface de piston correspondant à la surface de section droite, d'un alésage de cylindre 4, exprimée en .